# EUROPÄISCHE PATENTANMELDUNG

(11) **EP 3 285 365 A1**
(43) Veröffentlichungstag der Anmeldung: **21.02.2018**
(21) Anmeldenummer: 16184937.7
(22) Anmeldetag: 19.08.2016
(51) Int. Cl.: H02K 1/24

(54) **RELUKTANZLÄUFER**

(71) Anmelder: Siemens Aktiengesellschaft, 80333 München (DE)
(72) Erfinder: Büttner, Klaus, 97618 Hollstadt (DE); Greiner, Robert, 91083 Baiersdorf (DE); Kirchner, Klaus, 97645 Ostheim (DE); Warmuth, Matthias, 97618 Windshausen (DE)

(57) **Zusammenfassung**

Die Erfindung betrifft einen Reluktanzläufer (3) mit magnetisch leitenden Flusspfaden (4) und Flusssperren (5), wobei die Flusssperren (5) zumindest teilweise mit PU-Schaum (6) aufgefüllt sind.

## Beschreibung

Die Erfindung betrifft einen Reluktanzläufer einer dynamoelektrischen Maschine, insbesondere einer synchronen Reluktanzmaschine, ein Verfahren zur Herstellung des Reluktanzläufers, als auch die Anwendung eines Reluktanzläufers in einer dynamoelektrischen Maschine, insbesondere einer synchronen Reluktanzmaschine und die Anwendung einer derartigen elektrischen Maschine im Werkzeugmaschinenbau und in der Fahrzeugtechnik.

Reluktanzläufer sind in ihrem grundsätzlichen Aufbau mit magnetischen Flussleitpfaden und Flusssperren ausgeführt. Damit werden die erforderlichen Induktivitätsunterschiede im Reluktanzläufer erreicht, die zu einer dementsprechende Drehmomentausbeute einer synchronen Reluktanzmaschine führen.

Zum Erreichen der Flusssperren werden im Blechpaket des Reluktanzläufers Aussparungen vorgesehen, die aber zu einer Schwächung der mechanischen Stabilität des Blechpakets des Reluktanzläufers führen, so dass der Reluktanzläufer nicht für die gewünschten hohen Drehzahlen, vor allem nicht für Drehzahlen größer 40 m/s Umfangsgeschwindigkeit am Außendurchmesser des Reluktanzläufers geeignet ist. Um dementsprechende Drehzahlen zu erreichen, müsste die mechanische Stabilisierung verbessert werden, was aber letztlich u.a. zu einer Verstärkung der Streustege im Bereich der Flusssperren führt, die die Effizienz einer synchronen Reluktanzmaschine reduzieren.

Die heutigen Reluktanzläufer sind aufgrund ihrer Schwingungsneigung nur bedingt für die Drehzahlanforderung, z.B. im Bereich der Fahrzeuge, insbesondere Kraftfahrzeuge mit elektrischen Antrieben geeignet.

Dort würde der Reluktanzmotor, der ein hohes Drehmoment erzeugen kann durch die eingebrachten Flusssperren deutlich leichter sein als ein entsprechender Asynchronmotor. Allerdings ist bei der filigranen Stanzpaketierung des Reluktanzläufers die Schwingungsneigung dieser Reluktanztechnik üblicherweise höher, da im Vergleich zu einem Asynchronmotor im Rotor kein Kurzschlusskäfig vorgesehen ist. Dieser Kurzschlusskäfig eines Asynchronmotors wirkt über die Induktion als elektromagnetischer Dämpfer zwischen einem Stator und dem Reluktanzläufer.

In der Reluktanztechnik wird der magnetische Fluss direkt ohne Dämpfung des Stators über einen Luftspalt in den Läufer geführt. Aufgrund bestehender Leistungsanforderungen wird der Luftspalt zwischen Stator und Läufer geringer ausgeführt als beim Asynchronmotor, womit die drehmomentbildenden Kräfte und damit auch die Schwingungsanfälligkeit wesentlich höher sind. Demnach ist die Empfindlichkeit gegenüber Unsymmetrien z.B. in der Konzentrität, in der Reluktanztechnik erheblich höher. Dies macht sich in einer unvorteilhaften höheren Schwingungs- und Geräuschneigung z.B. eines synchronen Reluktanzmotors bemerkbar.

Um nunmehr die Schwingungsneigung zu reduzieren, ist es bekannt, ein nicht-ferromagnetisches Material, wie Aluminium, in die Flusssperren einzusetzen. Zusätzlich werden gegebenenfalls noch axiale Zwischenlagen in das Blechpaket parallel zu den jeweiligen Blechen eingebaut, die die mechanische Stabilisierung in Kombination mit dieser Aluminiumvergussmasse unterstützen sollen. Dies führt aber zu einer Erhöhung der bewegten Massen, die zur Drehmomentenbildung des Reluktanzmotors nichts beitragen.

Eine weitere Möglichkeit zur Reduzierung der Schwingungsneigung besteht in der Erhöhung des Motorgewichts durch massive Schwerbauweise von Motorkomponenten wie den Lagerschilden oder dem Gehäuse, um die erste Eigenfrequenz der synchronen Reluktanzmaschine hin zu höheren Frequenzen bzw. Drehzahlen zu verschieben.

Nachteilig dabei ist, dass insbesondere bei einer Anwendung derartiger Antriebe in der Kraftfahrzeugtechnik zusätzliche Massen nicht erwünscht sind.

Ausgehend davon liegt der Erfindung die Aufgabe zugrunde, einen Reluktanzläufer zu schaffen, der bei hoher Leistungsgradanforderung, hohen Wirkungsgrad und dementsprechenden Drehmomentverhalten weniger schwingungsanfällig ist. Des Weiteren soll einer derartiger Reluktanzläufer einfach herzustellen sein. Des Weiteren soll für hochtourige Anwendungen u.a. in der Werkzeugmaschinentechnik, Fluidtechnik oder Kraftfahrzeugtechnik ein geeigneter Antrieb bereitgestellt werden.

Die Lösung der gestellten Aufgabe gelingt durch einen Reluktanzläufer mit magnetisch leitenden Flusspfaden und Flusssperren, wobei die Flusssperren zumindest teilweise mit PU-Schaum aufgefüllt sind.

Die Lösung der gestellten Aufgabe gelingt ebenfalls durch eine dynamoelektrische Maschine mit einem Reluktanzläufer.

Ebenfalls gelingt die Lösung der gestellten Aufgabe durch eine Werkzeugmaschine oder ein Kraftfahrzeug mit einer dynamoelektrischen Maschine mit Reluktanzläufer.

Ebenso gelingt die Lösung der gestellten Aufgabe durch ein Verfahren zur Herstellung eines Reluktanzläufers mit magnetisch leitenden Flusspfaden und Flusssperren, wobei die Flusssperren zumindest teilweise mit PU-Schaum aufgefüllt sind durch folgende Schritte:
- Stanzen und Paketieren von Blechen des Reluktanzläufers,
- Einstellen der Schaumhärte und/oder Positionieren des Schaumes innerhalb der Flusssperren, in Abhängigkeit von geometrischen Abmessungen des Reluktanzläufers und/oder der ersten Eigenfrequenz einer Welle und/oder der Geräuschdämpfung.

Erfindungsgemäß wird nunmehr eine mechanische Stabilisierung und Schwingungsdämpfung durch zumindest teilweises Ausschäumen der Flusssperren erreicht. Dabei können sowohl nur Abschnitte einzelner Flusssperren als auch alle Flusssperren eines Reluktanzläufers vollständig ausgeschäumt werden. Hierzu eignen sich insbesondere Polyurethan-Integralschäume, die auch als PU-Schäume bezeichnet werden.

Je nach Anforderungen bezüglich Schwingungsverhalten, mechanischer Stabilität etc., die bei der Herstellung des Reluktanzläufers abgeprüft werden, sind mehrere Basisvarianten dieser PU-Schäume möglich. Dabei wird zwischen flexiblen und harten PU-Integralschäumen unterschieden. Je nach Anforderungen an die Stabilisierung des Blechpakets des Reluktanzläufers und/oder der Geräuschdämpfung können pro Reluktanzläufer auch unterschiedlich harte Schäume eingesetzt werden.

Alle diese vorhandenen Varianten der PU-Schäume können sowohl in der Raumdichte zwischen 0,01 bis 0,75 g/cm³ als auch zwischen unterschiedlichen Härtegraden eingestellt werden. Dies ist insbesondere bei der Herstellung des Reluktanzläufers vorteilhaft, wenn bei der Überprüfung des Blechpakets des Reluktanzläufers die Eigenfrequenz bekannt und durch Einsatz dementsprechender PU-Schäume diese z.B. zu höheren Frequenzen hin verschoben werden kann.

Vorteilhafterweise zeichnet sich der PU-Schaum durch eine exzellente Haftung an den Innenseiten der Flusssperren, also an den Blechen aus, was die mechanische Stabilisierung und Schwingungsdämpfung weiter verbessert. Des Weiteren wird mit dem PU-Schaum eine exzellente Geräuschdämpfung erreicht.

Mit einem derartigen Reluktanzläufer sind nunmehr im Betrieb einer dynamoelektrischen Maschine Drehzahlen deutlich über 40 m/s Umfangsgeschwindigkeit möglich. Ebenso werden die dadurch verursachten Geräusche gedämpft. Der PU-Schaum weist ebenfalls eine Dauergebrauchstemperatur von bis zu über 100°C auf, was für viele Anwendungsfälle von dynamoelektrischen Maschinen ausreichend ist.

Durch Verwendung des PU-Schaums wird weiterhin eine leichte Bauweise des Reluktanzläufers erreicht. Bei der Herstellung des Reluktanzläufers können nunmehr durch die vorhandenen, vorgebbaren Parameter des PU-Schaums, als auch dem Bekanntsein der ersten Eigenfrequenz des vorliegenden Reluktanzläufers, als auch dem Durchmesser und weiteren geometrischen Abmessungen dieses Reluktanzläufers die entsprechende Schaumhärte ebenso wie die Porenstruktur mit dem optimalen Raumgewicht eingesetzt werden.

Vor Fixieren des Blechpakets durch den PU-Schaum in den Flusssperren kann dieses um einen vorgebbaren axialen Winkel geschrägt werden, um im Betreib des Reluktanzläufers in einer dynamoelektrischen Maschine die Rastmomente zu reduzieren.

Je nach Poligkeit des Reluktanzläufers sind unterschiedliche Winkel vorzusehen. Bei höherpoligen Reluktanzläufers kann die Schrägung eine halbe bis zu zwei Polteilungen betragen, während bei zwei- oder vierpoligen Reluktanzläufern eine Schrägung von 10% bis max. der Hälfte einer Polteilung vorgesehen ist.

Die Erfindung sowie die vorteilhafte Ausgestaltung der Erfindung werden anhand eines prinzipiell dargestellten Ausführungsbeispiels näher erläutert. Dabei zeigen:
FIG 1 im Längsschnitt eine prinzipiell dargestellte dynamoelektrische Maschine,
FIG 2 einen Querschnitt eines Reluktanzläufers.

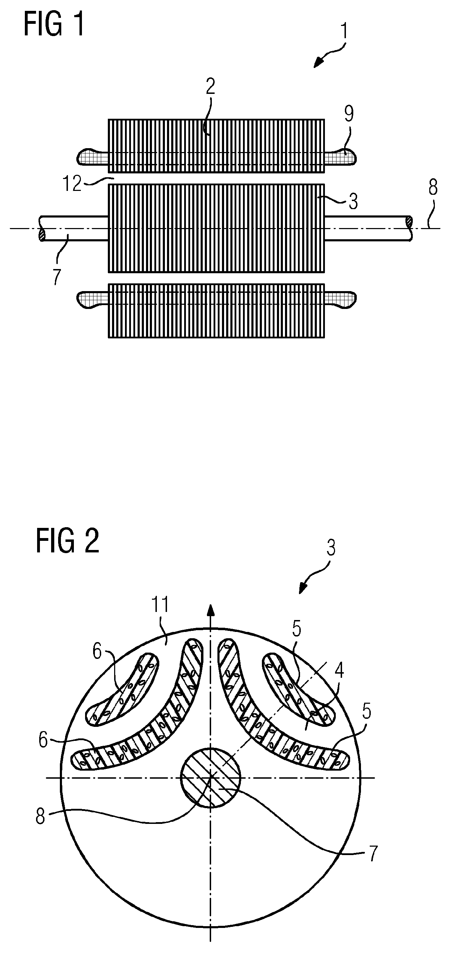

FIG 1 zeigt im Längsschnitt eine dynamoelektrische Maschine 1, die einen Stator 2 aufweist, der nicht näher dargestellten Nuten ein Wicklungssystem 9 aufweist. Ein Reluktanzläufer 3, der in axialer Richtung aus Einzelblechen aufgebaut ist, ist drehfest mit einer Welle 7 verbunden und somit um eine Achse 8 drehbar ausgeführt. Andere Komponenten, wie Gehäuse, Lagerschilde, Lager, ev. Geber etc. sind nicht näher dargestellt.

In der Reluktanztechnik wird der magnetische Fluss direkt ohne Dämpfung des Stators 2 über den Luftspalt in den Reluktanzläufer 3 geführt. Aufgrund der Wirkungsgrad- und Leistungsgradanforderungen wird der Luftspalt 12 zwischen Stator 2 und Reluktanzläufer 3 geringer ausgeführt als bei einem Asynchronmotor, womit die drehmomentbildenden Kräfte und damit auch die Schwingungsneigung wesentlich höher sind. Demnach ist die Empfindlichkeit gegenüber Unsymmetrien z.B. in der Konzentrität in der Reluktanztechnik grundsätzlich erheblich höher. Dies schlägt sich in einer unvorteilhaften höheren Schwingungs- und Geräuschneigung z.B. eines synchronen Reluktanzmotors nieder.

FIG 2 zeigt im Querschnitt einen vier-poligen Reluktanzläufer 3 mit beispielhaft dargestellten Flusssperren 5, die mit PU-Schaum 6 ausgefüllt sind. Zwischen den Flusssperren 5 sind die magnetischen Flussleitpfade 4 angeordnet, die zur Drehmomentbildung beitragen.

Aufgrund der mechanischen Stabilisierung des Blechpakets des Reluktanzläufers 3 durch den PU-Schaum 6 in den Flusssperren 5 kann die Welle 7 in ihrem Durchmesser vergleichsweise dünn ausgeführt werden und muss nicht zusätzlich zur Dämpfung der Eigenschwingung beitragen. Somit verbleibt, über den Durchmesser des Reluktanzläufers 3 betrachtet, erheblich mehr magnetleitendes Material vorhanden. Damit wird die Drehmomentausbeute eines derartigen Reluktanzläufers 3 verbessert bei gleichzeitiger verbesserter Geräuschdämpfung, reduzierter Schwingungsneigung und höheren Drehzahlen.

Bezogen auf die bisherigen Wellendurchmesser der bekannten Reluktanzläufer 3 ist eine Reduktion des Wellendurchmessers von ca. 10 % möglich. Außerdem wird durch die erfindungsgemäße Ausgestaltung des Reluktanzläufers 3 die Biegeeigenfrequenz um ca. 10% oder mehr nach oben verschoben. Dies bedeutet z.B. bei einer Achshöhe 100 einer dynamoelektrischen Maschine mit einem vierpoligen Reluktanzläufers 3 eine Anhebung der Eigenfrequenz von 4600 Hz auf zumindest ca. 5000 Hz.

In der dargestellten Ausführung sind in radialer Richtung zwei Flusssperren 5 gezweigt, es können jedoch auch drei, vier, fünf oder mehr Flusssperren 5 in radialer Richtung vorgesehen sein.

Ebenso ist die Erfindung bei zwei- vier- oder mehrpoligen Reluktanzläufern 3 einsetzbar.

Ein derartiger Reluktanzläufer 3 bei Einsatz in einer dynamoelektrischen Maschine nach FIG 1 wird vorteilhafterweise aufgrund seines geringen Gewichts seiner hohen Drehmomentausbeute vor allem bei Fahrzeugen, insbesondere bei E-Cars, Straßenbahnen oder auch anderen Traktionsantrieben eingesetzt.

Auch im Werkzeugmaschinenbau können derartige dynamoelektrische Maschine 1 eingesetzt werden, da aufgrund seiner geringen Trägheit des Reluktanzläufers 3 und der hohen Drehmomentausbeute dies für mehrere Anwendungen im Werkzeugmaschinenbau u.a. für schnelle kurze Bewegungshübe vorteilhaft ist.

Ebenso ist ein Antrieb mit einem derartigen Reluktanzläufers 3 bei Pumpen und Kompressoren aufgrund der vergleichsweise hohen Drehmomentausbeute einsetzbar. Auch dort führt eine derartige dynamoelektrische Maschine 1 mit einem erfindungsgemäßen Reluktanzläufers 3 zu einer verbesserten Geräuschdämpfung, reduzierter Schwingungsneigung des Antriebsstranges und höheren Drehzahlen.

## Patentansprüche

1. Reluktanzläufer (3) mit magnetisch leitenden Flusspfaden (4) und Flusssperren (5), wobei die Flusssperren (5) zumindest teilweise mit PU-Schaum (6) aufgefüllt sind.

2. Reluktanzläufer (3) nach Anspruch 1, **dadurch gekennzeichnet, dass** die Flusssperren (5) mit PU-Schaum (6) unterschiedlicher Härtegrade ausgefüllt sind.

3. Dynamoelektrische Maschine mit einem Reluktanzläufer (3) mit magnetisch leitenden Flusspfaden (4) und Flusssperren (5), wobei die Flusssperren (5) zumindest teilweise mit PU-Schaum (6) gefüllt sind.

4. Werkzeugmaschinenantrieb oder Antrieb eines Fahrzeugs oder Antrieb eines Kompressors oder Antrieb einer Pumpe mit zumindest einer dynamoelektrischen Maschine nach Anspruch 3.

5. Verfahren zur Herstellung eines Reluktanzläufers (3) nach Anspruch 1 oder 2 durch folgende Schritte:
- Stanzen und Paketieren von Blechen (11) des Reluktanzläufers (3),
- Einstellen der Schaumhärte und/oder Positionieren des Schaumes innerhalb der Flusssperren, in Abhängigkeit von geometrischen Abmessungen des Reluktanzläufers (3) und/oder der ersten Eigenfrequenz einer Welle (7) und/oder der Geräuschdämpfung.

6. Verfahren nach Anspruch 5, **dadurch gekennzeichnet, dass** das gestanzte und paketierte Blechpaket des Reluktanzläufers (3) vor dem Ausfüllen der Flusssperren (5) mit PU-Schaum um einen vorgebbaren axialen Winkel geschrägt wird.
